# FASCICULE DE BREVET EUROPEEN

(11) **EP 1 868 958 B1**
(45) Date de publication et mention de la délivrance du brevet: **16.12.2009**
(21) Numéro de dépôt: 06726169.3
(22) Date de dépôt: 31.03.2006
(51) Int. Cl.: C04B 35/482, C04B 35/48, C03B 5/43

(54) **PRODUIT FRITTE A BASE DE ZIRCON**
AUF ZIRCONIUM BASIERENDES SINTERPRODUKT
ZIRCONIUM-BASE SINTERED PRODUCT

(30) Priorité: 15.04.2005 FR 0503790
(43) Date de publication de la demande: 26.12.2007
(73) Titulaire: Saint-Gobain Centre de Recherches et d'Etudes Européen, 92400 Courbevoie (FR)
(72) Inventeur: GAUBIL, Michel, F-84000 Avignon (FR); BOUSSANT-ROUX, Yves, F-84140 Montfavet (FR); MCGARRY, Charles, Buckhannon, WV 26201 (US); CABODI, Isabelle, F-84300 Cavaillon (FR); CITTI, Olivier, F-84000 Avignon (FR)
(74) Mandataire: Sartorius, Jérome
(86) Numéro de dépôt international: PCT/FR2006/000722
(87) Numéro de publication internationale: WO 2006/108945

(56) Documents cités:
- EP-A- 0 662 461
- EP-A- 0 952 125
- US-A- 5 124 287
- ILUKA DATA SHEET: "Zircon sand" mai 2004 (2004-05), , XP002355399 *voir analyses*
- DU PONT: "Florida zircon sands" octobre 2002 (2002-10), BROCHURE , XP002355400 *voir analyses*

## Description

L'invention concerne de nouveaux matériaux frittés produits à partir de zircon, un procédé pour leur fabrication et leur utilisation en four de verrerie.

Parmi les produits réfractaires, on distingue les produits fondus et coulés et les produits frittés.

A la différence des produits frittés, les produits fondus et coulés comportent le plus souvent une phase vitreuse intergranulaire très abondante qui vient remplir le réseau des grains cristallisés. Les problèmes rencontrés dans leurs applications respectives par les produits frittés et par les produits fondus et coulés, et les solutions techniques adoptées pour les résoudre, sont donc généralement différents. Par ailleurs, du fait des différences importantes entre les procédés de fabrication, une composition mise au point pour fabriquer un produit fondu et coulé n'est pas *a priori* utilisable telle quelle pour fabriquer un produit fritté et réciproquement.

Les produits frittés sont obtenus par mélange de matières premières appropriées puis mise en forme à cru de ce mélange et cuisson de la forme crue résultante à une température et pendant un temps suffisants pour obtenir le frittage de cette forme crue.

Les produits frittés, selon leur composition chimique et leur mode de préparation, sont destinés à des industries très variées.

Un produit fritté adapté à une application particulière ne possèdera donc pas *a priori* les propriétés nécessaires pour être utilisé dans une autre application où les conditions de température, de corrosion ou d'abrasion sont différentes.

Par exemple US 3,899,341 décrit des produits frittés élaborés à partir de zircon (50-90%) et de zircone. La zircone est partiellement stabilisée afin de limiter les déformations élastiques des produits, qui conduisent à des fissurations. Les produits de US 3,899,341 sont cependant conçus pour être utilisés en contact avec de l'acier fondu. Ils ne sont donc pas, *a priori*, aptes à être utilisés en contact avec un verre fondu.

Parmi les produits frittés, les produits denses élaborés à partir de zircon (silicate de zirconium : ZiO₂.SiO₂, ou ZrSiO₄) et éventuellement de zircone (oxyde de zirconium : ZrO₂) peuvent être utilisés dans des applications où ils sont directement au contact de verre fondu, en particulier dans le cas des verres non alcalins.

EP 952125 décrit ainsi des produits frittés destinés à des fours de verrerie et élaborés à partir de zircon (5-40%) et de zircone. Ces produits contiennent en outre des oxydes de titane, d'alumine et d'yttrium permettant l'élaboration de gros blocs sans fissures. La teneur de ces produits en SiO₂ est inférieure à 14 %. Leur teneur en ZrO₂ + HfO₂ est supérieure à 82 %.

WO 02/44102 décrit des « isopipes » utilisés pour la fabrication de feuilles de verre. Les isopipes comportent plus de 95% en poids de zircon et présentent un comportement au fluage insuffisant, à moins de comporter également entre 0,2 et 0,4% d'oxyde de titane. Pour illustrer l'état de la technique, WO 02/44102 cite US 5,124,287.

US 5,124,287 décrit des compositions contenant de 75 à 95% de zircon et de l'oxyde de titane, destinées à être en contact avec du verre fondu. Il indique que la présence d'oxyde de titane est favorable à la densification des produits obtenus après frittage. Dans le produit final, la zircone doit être non stabilisée et il est donc préférable d'utiliser de la zircone non stabilisée dans le mélange de départ. L'utilisation de zircone stabilisée, par exemple avec des stabilisants de la zircone tels que les oxydes d'yttrium ou de calcium, n'est cependant pas rédhibitoire, le chauffage du mélange conduisant à déstabiliser la zircone.

Le fluage d'un matériau sous l'action d'une contrainte (compression, traction ou flexion) peut se définir comme la capacité du matériau à se déformer plastiquement, c'est-à-dire de manière permanente, sous l'effet de cette charge. Le fluage des céramiques réfractaires est en général activé thermiquement, c'est-à-dire que l'augmentation de la température tend à augmenter la vitesse de fluage du matériau.

Dans certaines applications verrières, et notamment pour la mise en forme de feuilles de verre, le fluage doit être limité autant que possible car ce dernier peut entraîner de telles déformations du bloc réfractaire qu'elles conduisent à des difficultés de respect des spécifications dimensionnelles de la feuille de verre et à de fortes pertes de rendement pour le verrier.

Il existe donc un besoin pour un produit présentant une résistance au fluage améliorée et pouvant être utilisé dans les fours de verrerie. La présente invention vise à satisfaire ce besoin.

A cet effet, l'invention propose un produit fritté élaboré à partir d'une charge de départ contenant 75 à 99% de zircon, et présentant la composition chimique pondérale moyenne, en pourcentages massiques sur la base des oxydes, suivante :
60 % ≤ ZrO₂ + HfO₂ ≤ 75 %,
27 % ≤ SiO₂ ≤ 34%,
0,2 ≤ TiO₂ ≤ 1,5 %,
0,3 < Y₂O₃ ≤ 3,5 %,
Autres oxydes : ≤ 1 %,
pour un total de 100 %.

Comme nous le verrons plus loin, ce produit réfractaire fritté présente une résistance au fluage améliorée par rapport aux produits décrits jusqu'à ce jour.

De préférence, le produit selon l'invention présente encore de préférence une ou plusieurs des caractéristiques optionnelles suivantes :
- La teneur en zircon dans la charge de départ est supérieure ou égale à 80 %, en pourcentage en poids sur la base des oxydes.
- La teneur en zircone supérieure à 5%, de préférence à 10 %, et/ou inférieure à 15%, en pourcentages massiques sur la base des oxydes.
- La zircone est au moins en partie stabilisée par de l'oxyde d'yttrium, le pourcentage massique de zircone stabilisée étant supérieur à 10%, de préférence à 20 % de la zircone.
- La teneur totale en oxyde d'yttrium (Y₂O₃) est inférieure ou égale à 1,7 % et/ou supérieure ou égale à 0,7 %, en pourcentages massiques sur la base des oxydes. En effet, au delà de 1,7%, les phases cristallines principales peuvent être significativement modifiées, entraînant une augmentation de la rigidité du matériau, voire des problèmes de faisabilité.

L'invention concerne également un procédé de fabrication d'un produit fritté comportant les étapes suivantes :
a) mélange de matières premières pour former une charge de départ,
b) mise en forme d'une pièce crue à partir de ladite charge de départ,
c) frittage de ladite pièce crue de manière à obtenir ledit produit fritté, remarquable en ce que la charge de départ est déterminée de manière que ledit produit soit conforme à l'invention.

De préférence, à l'étape a), on ajoute de la zircone monoclinique et/ou comportant au moins 1% d'oxyde d'yttrium, non associé à de la zircone, et/ou au moins 1 % de silice à la charge de départ, en pourcentages massiques sur la base des oxydes.

De préférence encore, à l'étape a), on ajoute du zircon et éventuellement de la zircone en des quantités telles que le total des teneurs en zircon et en zircone représente au moins 95 % de la charge de départ, en pourcentage en poids sur la base des oxydes.

L'invention concerne aussi l'utilisation d'un produit réfractaire selon l'invention dans un four de verrerie, en particulier dans des zones du fouren contact avec du verre fondu.

Dans la présente description et conformément à l'usage, on appelle « zircone » les molécules de ZrO₂ qui ne sont pas associées à des molécules de SiO₂ pour former du zircon. De même, on appelle « silice » les molécules de SiO₂ qui ne sont pas associées à des molécules de ZrO₂ pour former du zircon.

Sauf mention contraire, tous les pourcentages sont des pourcentages massiques sur la base des oxydes.

Le zircon peut être apporté par du sable de zircon ou bien de la chamotte de produits denses à forte teneur en zircon.

La composition selon l'invention, déterminée par analyse chimique, ne fournit que les teneurs globales en SiO₂ et ZrO₂, sans distinguer les teneurs correspondantes en zircon.

Selon l'invention, il est indispensable que la charge de départ comporte au moins 75 %, de préférence au moins 80% de zircon. Les propriétés avantageuses du produit selon l'invention ne seraient en effet pas obtenues si les quantités de SiO₂ et ZrO₂ apportées par le zircon selon l'invention étaient apportées sous forme de silice et de zircone.

De préférence, le total des teneurs en zircon et en zircone représente au moins 95 % de la charge de départ.

Les matières premières contenant de la zircone contiennent également de petites quantités de HfO₂ (1,5 à 2 %) et, selon la pratique usuelle, ces deux oxydes ne sont pas distingués l'un de l'autre.

La zircone présente des variations dilatométriques importantes dues à son changement d'état cristallographique à haute température. Pour limiter ces variations dilatométriques, en particulier sur les gros blocs, il est nécessaire de limiter la teneur en zircone. La charge de départ doit donc contenir moins de 25 % de zircone, ce qui est assuré avec une teneur en zircon d'au moins 75 %.

De préférence la zircone dans le produit selon l'invention est au moins en partie stabilisée avec de l'oxyde d'yttrium, le pourcentage en poids de zircone stabilisée étant supérieur à 10 % de la zircone. A cette fin, la zircone doit être introduite sous forme non stabilisée et l'oxyde d'yttrium ajouté de manière séparée dans la charge de départ.

Par ailleurs, comme le tableau 3 ci-dessous le démontre, il est important que la stabilisation de la zircone soit assurée par de l'oxyde d'yttrium. Des stabilisants classiques de la zircone comme la magnésie ou la chaux se sont en effet révélés avoir un effet très négatif sur la résistance au fluage du matériau.

Selon l'invention, la présence d'oxyde d'yttrium améliore la résistance au fluage du produit réfractaire à base de zircon. Si de la zircone est ajoutée dans la charge de départ, on peut utiliser de la zircone stabilisée à l'oxyde d'yttrium pour apporter l'oxyde d'yttrium. Comme expliqué ci-dessus, de préférence, l'oxyde d'yttrium est ajouté à la charge de départ indépendamment de la zircone afin de favoriser la stabilisation, au moins en partie, la zircone dans le produit selon l'invention.

Il est cependant souhaitable que l'oxyde d'yttrium ne stabilise pas une quantité trop importante de la zircone. La teneur en oxyde d'yttrium est donc limitée à 3,5%.

La teneur en SiO₂ du produit selon l'invention correspond à la teneur en SiO₂ du zircon et à la silice libre. De préférence, on ajoute au moins 1 % de silice à la charge de départ de manière à favoriser le démarrage de la densification à des températures plus faibles que celles nécessaires à la densification du zircon pur.

La teneur totale en TiO₂ est classiquement comprise entre 0,2 et 1,5% dans les produits frittés à forte teneur en zircon. TiO₂ permet de promouvoir le frittage du zircon et favorise la densification des produits au cours du frittage.

Les « autres oxydes » sont des oxydes tels que Na₂O, Al₂O₃, P₂O₅ ou Fe₂O₃. Les teneurs en Na₂O (qui favorise la dissociation du zircon) et en Fe₂O₅ doivent être minimisés. Apportés par les matières premières, ils ne sont pas des constituants nécessaires, mais seulement tolérés.

Les exemples non limitatifs suivants sont donnés dans le but d'illustrer l'invention.

Dans ces exemples, les matières premières employées ont été choisies parmi (les pourcentages donnés sont des pourcentages massiques) :
- du sable de zircon contenant 66,8% de ZrO₂+HfO₂, 32,7% de SiO₂, 0,2% d'Al₂O₅ et 0,1 % de TiO₂ ;
- de la zircone telle que la CS10 ou la CC10, commercialisées par la société Saint-Gobain ZirPro. Ces produits contiennent au moins 98,8 % de ZrO₂+HfO₂ et 0,1 à 0,5% de SiO₂ et présentent un diamètre médian (D50) des particules d'environ 3, 5 µm ;
- de la zircone yttriée contenant 92% de ZrO₂+HfO₂, 7% d'Y₂O₃, 0,3% d'Al₂O₃ et 0,2 % de TiO₂. Le diamètre médian (D50) des particules d'environ 11 µm ;
- de l'oxyde de titane contenant 96,6 % de TiO₂, 1,7% de Fe₂O₃, 0,8% de SiO₂ et 0,6% d'Al₂O₃.
- de l'oxyde d'yttrium de pureté supérieure à 99,9 % présentant des particules de diamètre moyen de 3 à 4µm ;
- de l'acide phosphorique (solution aqueuse de H₃PO₄ à 85%).
- de la silice cristalline contenant plus de 98% de SiO₂ et présentant un diamètre médian (D50) d'environ 10 µm.

Des blocs réfractaires frittés ont été fabriqués selon un procédé comportant classiquement les étapes suivantes :
a) broyage éventuel des sources de zircon,
b) mélange des matières premières pour former la charge de départ,
c) mise en forme d'une pièce crue à partir dudit mélange,
d) frittage de ladite pièce crue.

L'étape a) permet d'atteindre les caractéristiques granulométriques classiques nécessaires à la bonne densification ultérieure du matériau. Pour les exemples décrits ici, les poudres ainsi préparées présentaient un diamètre médian (D50) inférieur à 5µm.

A l'étape b), toutes les matières premières ont été dosées pour que le mélange ait la composition chimique pondérale moyenne désirée, puis mélangées en présence de liant(s) utilisés classiquement dans les procédés de frittage du zircon, par exemple de l'acide phosphorique.

Le mélange des matières premières pourrait éventuellement être atomisé avant de passer à l'étape c).

A l'étape c), le mélange a ensuite été mis en forme par pressage isostatique afin de former des blocs de taille désirée (100x100x150 mm).

D'autres techniques telles que le vibro-coulage pourraient être utilisées.

A l'étape d), la pièce crue a alors été frittée sous air, à pression atmosphérique et à une température comprise entre 1400°C et 1700°C, de manière à former un bloc réfractaire dense.

Sur les différents blocs réalisés, des échantillons ont été prélevés afin de réaliser des essais de caractérisation.

Dans un test de fluage, dit « isotherme », on utilise une configuration d'essai de flexion à quatre points d'appui (distance entre appuis extérieurs L=110 mm, distance entre appuis intérieurs I=40 mm). Une barrette de dimensions 25 mm x 15 mm x 150 mm est posée sur ces points d'appui, puis soumise en son milieu à une contrainte de 2MPa, la température étant maintenue constante et égale à 1275°C. On enregistre la variation de la flèche de la barrette (en mm) tout au long de l'essai. On compare les valeurs Df15 et Df90, c'est-à-dire les déformations données en pourcentage au bout de 15 heures et 90 heures, respectivement, des différents échantillons testés.

Dans le test de bullage, l'échantillon de produit à tester constitue un creuset cylindrique dont l'épaisseur des parois est de 5 mm et le diamètre intérieur de 30 mm. Ce creuset est rempli de verre de type boro-silico-aluminate. Il est ensuite porté à 1350°C sous air pendant 70 heures. Une fois le traitement thermique achevé, le creuset est refroidi puis scié de manière à couper le verre. On observe ensuite à l'oeil nu la coupe du verre. On évalue l'indice de bullage IB selon une échelle comprise entre 1 (minimum de bullage) et 10 (bullage intense ou moussage), en fonction du nombre de bulles de gaz emprisonnées dans le verre après refroidissement. L'indice de bullage est considéré comme bon s'il est inférieur ou égal à 5.

Pour évaluer la résistance à la corrosion, des échantillons de diamètre 20mm et de longueur 100mm sont maintenus en rotation pendant 180 heures dans un bain de verre de type boro-silico-aluminate à 1400°C. Une fois le cycle thermique terminé, les échantillons sont sortis du bain de verre, et le volume des échantillons est mesuré et comparé au volume initial. Le rapport entre le volume corrodé de l'échantillon testé et le volume corrodé de l'échantillon de référence, multiplié par cent, détermine l'indice de corrosion IC.

La composition du mélange des matières premières est indiquée dans le tableau 1 (pourcentages massiques sur la base du mélange).

Le produit de référence est le produit n°1.

**Tableau 1**

| N° | Sable de zircon (%) | Zircone (%) | Silice (%) | Oxyde de titane (%) | Oxyde d'yttrium (%) | Zircone yttriée | Acide phosphorique (%) |
|---|---|---|---|---|---|---|---|
| 1 | 84,9 | 12,5 | 1,3 | 1,0 | | | 0,3 |
| 2 | 98,0 | | 1,4 | 0,2 | | | 0,4 |
| 3 | 83,6 | 12,5 | 1,3 | 1,0 | 1,3 | | 0,3 |
| 4 | 83,4 | 12,4 | 1,4 | 1,0 | 1,5 | | 0,3 |
| 5 | 85,0 | | 1,2 | 1,0 | | 12,5 | 0,3 |
| 6 | 95,7 | | 1,3 | 1,1 | 1,5 | | 0,4 |

L'analyse chimique moyenne des différents produits testés et les résultats des tests sont donnés dans le tableau 2 (pourcentages massiques sur la base des oxydes). La teneur en oxydes minoritaires tels que Al₂O₃, P₂O₅, Fe₂O₃, ... n'apparaît pas dans le tableau. La teneur totale en oxydes minoritaires est inférieure à 1 %.

**Tableau 2**

| N° | ZrO₂+ HfO₂ (%) | SiO₂ (%) | TiO₂ (%) | Additif (%) | Df15 | Df90 | IC | IB | Densité |
|---|---|---|---|---|---|---|---|---|---|
| 1 | 69,2 | 29,1 | 1,1 | | 0,20 | 0,54 | 100 | 2 | 4,30 |
| 2 | 65,4 | 33,4 | 0,3 | | 0,27 | 1,28 | 100 | 3 | 3,90 |
| 3 | 68,3 | 28,6 | 1,1 | 1,3 (Y₂O₃) | 0,08 | 0,18 | 100 | 1 | 4,38 |
| 4 | 68,1 | 28,7 | 1,0 | 1,5 (Y₂O₃) | 0,02 | 0,04 | 100 | 1 | 4,15 |
| 5 | 68,3 | 29,0 | 1,1 | 0,9 (Y₂O₃) | 0,08 | 0,20 | 100 | | |
| 6 | 63,9 | 32,6 | 1,2 | 1,5 (Y₂O₃) | 0,09 | 0,16 | 100 | 1 | |
| 7 | 68,7 | 29,1 | 1,0 | 0,35 (MgO) | 0,92 | ND | | | |
| 8 | 68,8 | 29,1 | 1,0 | 0,24 (CaO) | 1,33 | ND | | | |

| | | | | | | | | | |
|---|---|---|---|---|---|---|---|---|---|
| ND : Donnée non disponible du fait d'une déformation excessive et de la casse des barrettes avant la fin du test de fluage. | | | | | | | | | |

Les exemples montrent que l'ajout d'oxyde d'yttrium permet de diminuer très significativement la déformation due au fluage.

L'ajout d'oxyde d'yttrium ne dégrade pas les autres propriétés du matériau. En effet, l'indice de corrosion est identique à celui du produit de référence. De plus, le bullage est légèrement amélioré avec les produits de l'invention.

Le produit n°4 présente la meilleure résistance au fluage. Une comparaison avec l'exemple 6 montre qu'il est préférable d'apporter de la zircone. De préférence, la charge de départ comporte au moins 5 %, de préférence au moins 10 % de zircone.

Une comparaison des exemples 4 et 5 montre encore qu'il est préférable d'apporter, dans la charge de départ, l'oxyde d'yttrium sous forme non associée à de la zircone plutôt que d'apporter de la zircone yttriée. De préférence, la charge du départ comporte au moins 1% d'oxyde d'yttrium non associé à de la zircone (c'est-à-dire n'agissant pas comme stabilisant de la zircone).

Par ailleurs, les analyses cristallographiques révèlent une structure composée de grains de zircon entourés d'une phase intergranulaire comportant principalement de la zircone et de la silice. Pour les produits de l'invention, l'oxyde d'yttrium se combine avec la zircone dans la phase intergranulaire et ne rentre pas dans les grains de zircon.

Des essais complémentaires de résistance à la compression menés avec les produits des exemples 1 et 5 montrent que le comportement du produit de l'invention est amélioré.

Les exemples 7 et 8 montrent qu'un stabilisant quelconque de la zircone, par exemple la magnésie ou la chaux, ne permet pas d'obtenir le résultat recherché. Ces stabilisants se sont en effet révélés avoir un effet très négatif sur la résistance au fluage du matériau.

Bien entendu, la présente invention n'est pas limitée aux modes de réalisation décrits fournis à titre d'exemples illustratifs.

En particulier, le produit selon l'invention n'est pas limité à un produit fabriqué selon le procédé décrit ci-dessus. Tout procédé connu pour fabriquer des produits frittés à partir du zircon pourrait convenir.

## Revendications

1. Produit fritté élaboré à partir d'une charge de départ contenant 75 à 99% de zircon, et présentant la composition chimique pondérale moyenne suivante, en pourcentages massiques sur la base des oxydes :
60 % ≤ ZrO₂ + HfO₂ ≤ 75 %,
27 % ≤ SiO₂ ≤ 34%,
0,2 ≤ TiO₂ ≤ 1,5 %,
0,3 < Y₂O₃ ≤ 3,5 %,
autres oxydes : ≤ 1 %,
pour un total de 100 %.

2. Produit fritté selon la revendication 1 dans lequel la teneur en zircon dans la charge de départ est supérieure ou égale à 80 %, en pourcentage en poids sur la base des oxydes.

3. Produit fritté selon l'une quelconque des revendications 1 et 2 présentant une teneur en zircone supérieure à 5%, et/ou inférieure à 15%, en pourcentages en poids sur la base des oxydes.

4. Produit fritté selon la revendication 1 dans lequel la zircone est au moins en partie stabilisée par de l'oxyde d'yttrium, le pourcentage en poids de zircone stabilisée étant supérieur à 10 % de la zircone.

5. Produit fritté selon l'une quelconque des revendications précédentes, dans lequel la teneur totale en oxyde d'yttrium (Y₂O₃) est inférieure ou égaie à 1,7 % et/ou supérieure ou égale à 0,7 %, en pourcentages en poids sur la base des oxydes.

6. Utilisation d'un produit réfractaire selon l'une quelconque des revendications précédentes dans un four de verrerie.

7. Procédé de fabrication d'un produit fritté comportant les étapes suivantes :
a) mélange de matières premières pour former une charge de départ,
b) mise en forme d'une pièce crue à partir de ladite charge de départ,
c) frittage de ladite pièce crue de manière à obtenir ledit produit fritté,
**caractérisé en ce que** la charge de départ est déterminée de manière que ledit produit soit conforme à l'une quelconque des revendications 1 à 5.

8. Procédé de fabrication selon la revendication 7, dans lequel, à l'étape a), on ajoute de la zircone monoclinique.

9. Procédé de fabrication selon l'une quelconque des revendications 7 et 8, dans lequel, à l'étape a), on ajoute au moins 1% d'oxyde d'yttrium non associé à de la zircone.

10. Procédé de fabrication selon l'une quelconque des revendications 7 à 9, dans lequel, à l'étape a), on ajoute du zircon et éventuellement de la zircone en des quantités telles que le total des teneurs en zircon et en zircone représente au moins 95 % de la charge de départ, en pourcentage en poids sur la base des oxydes.

11. Procédé de fabrication selon l'une quelconque des revendications 7 à 10, dans lequel, à l'étape a), on ajoute au moins 1 % de silice à la charge de départ en pourcentage en poids sur la base des oxydes.

## Claims

1. Sintered product produced from a starting charge containing 75 to 99% zircon, and having the following average chemical composition by weight, the percentages by weight being based on the oxides:
60% ≤ ZrO₂ + HfO₂ ≤ 75%;
27% ≤ SiO₂ ≤ 34%;
0.2 ≤ TiO₂ ≤ 1.5%;
0.3 < Y₂O₃ ≤ 3.5%; and
other oxides: ≤ 1%;
for a total of 100%.

2. Sintered product according to Claim 1, in which the zircon content in the starting charge is greater than or equal to 80% as a percentage by weight on the basis of the oxides.

3. Sintered product according to either one of Claims 1 and 2, having a zirconia content of greater than 5% and/or less than 15%, in percentages by weight on the basis of the oxides.

4. Sintered product according to Claim 1, in which the zirconia is at least partially stabilized by yttrium oxide, the percentage by weight of stabilized zirconia being greater than 10% of the zirconia.

5. Sintered product according to any one of the preceding claims, in which the total content of yttrium oxide (Y₂O₃) is less than or equal to 1.7% and/or greater than or equal to 0.7%, in percentages by weight on the basis of the oxides.

6. Use of a refractory product according to any one of the preceding claims in a glass furnace.

7. Process for manufacturing a sintered product comprising the following steps:
a) raw materials are mixed to form a starting charge;
b) a green part is formed from said starting charge; and
c) said green part is sintered so as to obtain said sintered product,
said process being **characterized in that** the starting charge is determined in such a way that said product is in accordance with any one of Claims 1 to 5.

8. Manufacturing process according to Claim 7, in which monoclinic zirconia is added in step a).

9. Manufacturing process according to either one of Claims 7 and 8, in which at least 1% yttrium oxide not associated with zirconia is added in step a).

10. Manufacturing process according to any one of Claims 7 to 9, in which zircon and optionally zirconia are added in step a) in amounts such that the total of the zircon and zirconia contents represents at least 95% of the starting charge as a percentage of the weight on the basis of the oxides.

11. Manufacturing process according to any one of Claims 7 to 10, in which at least 1% silica is added in step a) to the starting charge as a percentage by weight on the basis on the oxides.

## Patentansprüche

1. Sinterprodukt hergestellt auf der Basis einer Ausgangscharge enthaltend von 75 bis 99% an Zirkon und aufweisend die folgende gewichtsmäßige mittlere chemische Zusammensetzung in Massenprozenten auf der Basis der Oxide:
60% ≤ Zr0₂ + Hf0₂ ≤ 75%,
27% ≤ Si0₂ ≤ 34%,
0,2 ≤ Ti0₂ ≤ 1,5%,
0,3 < Y₂0₃ ≤ 3,5%,
weitere Oxide: ≤ 1 %,
so dass sich insgesamt 100% ergibt.

2. Sinterprodukt nach Anspruch 1, bei dem der Gehalt an Zirkon in der Ausgangscharge nicht kleiner ist als 80%, in Gewichtsprozenten auf der Basis der Oxide, ist.

3. Sinterprodukt nach einem beliebigen der Ansprüche 1 und 2, das einen Gehalt an Zirkonoxid oberhalb von 5% und/oder unterhalb von 15%, in Gewichtsprozenten auf der Basis der Oxide, aufweist.

4. Sinterprodukt nach Anspruch 1, bei dem das Zirkonoxid zumindest teilweise stabilisiert ist durch Yttriumoxid, dabei sind die Gewichtsprozente an stabilisiertem Zirkonoxid oberhalb von 10% des Zirkonoxids.

5. Sinterprodukt nach einem beliebigen der vorangegangenen Ansprüche, bei dem der Gesamtgehalt an Yttriumoxid (Y₂0₃) nicht oberhalb von 1,7% und/oder nicht unterhalb von 0,7%, in Gewichtsprozenten auf der Basis der Oxide, beträgt.

6. Verwendung eines feuerfesten Produktes nach einem beliebigen der vorangegangenen Ansprüche für einen Ofen in der Glasindustrie.

7. Verfahren zur Herstellung eines Sinterproduktes, das die folgenden Verfahrensschritte aufweist:
a) Mischen von Ausgangsmaterialien, um eine Ausgangscharge herzustellen,
b) Formgeben eines Rohteils ausgehend von der Ausgangscharge,
c) Sintern des Rohrteils dergestalt, dass das genannte Sinterprodukt erhalten wird,
**dadurch gekennzeichnet, dass** die Ausgangscharge so bestimmt ist, dass das erhaltene Produkt konform ist mit einem beliebigen der Ansprüche 1 bis 5.

8. Verfahren zur Herstellung nach Anspruch 7, bei dem man im Verfahrensschritt a) monoklinisches Zirkonoxid hinzufügt.

9. Verfahren zur Herstellung nach einem der beliebigen der Ansprüche 7 und 8, bei dem man im Verfahrensschritt a) mindestens 1% an Yttriumoxid hinzufügt, das nicht assoziiert ist mit dem Zirkonoxid.

10. Verfahren zur Herstellung nach einem der beliebigen der Ansprüche 7 bis 9, bei dem man Zirkon und evtl. Zirkonoxid in solchen Quantitäten zufügt, dass das Gesamte der Gehalte an Zirkon und Zirkonoxid mindestens 95% der Ausgangscharge darstellt, in Gewichtsprozent auf der Basis der Oxide.

11. Verfahren zur Herstellung nach einem der beliebigen der Ansprüche 7 bis 10, bei dem man im Verfahrensschritt a) der Ausgangscharge mindestens 1% an Siliziumoxid, in Gewichtsprozenten auf der Basis der Oxide, hinzufügt.
